# EUROPÄISCHE PATENTSCHRIFT

(11) **EP 2 698 266 B1**
(45) Veröffentlichungstag und Bekanntmachung des Hinweises auf die Patenterteilung: **16.12.2015**
(21) Anmeldenummer: 12006085.0
(22) Anmeldetag: 28.08.2012
(51) Int. Cl.: B60D 5/00

(54) **Wellenbalgartige Balgschürze eines Balges eines Übergangs zwischen zwei gelenkig miteinander verbundenen Fahrzeugen**
Gaiter apron in the shape of a gangway bellows for the intersection of two vehicles with a jointed connection
Jupe à soufflet ondulé d'un soufflet de passage entre deux véhicules reliés de manière articulée

(30) Priorität: 18.08.2012 EP 12005947
(43) Veröffentlichungstag der Anmeldung: 19.02.2014
(73) Patentinhaber: Hübner GmbH & Co. KG, 34123 Kassel (DE)
(72) Erfinder: Jünke, Volker, 34587 Felsberg (DE); Malatitsch, Marcus, Shanghai 201702 (CN)
(74) Vertreter: Walther, Walther & Hinz GbR

(56) Entgegenhaltungen:
- EP-A1- 0 389 934
- EP-A1- 2 322 363
- DE-B3- 10 246 236

## Beschreibung

Die Erfindung betrifft eine wellenbalgartige Balgschürze eines Balges eines Übergangs zwischen zwei gelenkig miteinander verbundenen Fahrzeugen, wobei die Balgschürze mehrere nebeneinander angeordnete wellenförmige Elemente aufweist, die im Bereich der Schenkel der einzelnen wellenförmigen Elemente miteinander verbunden sind, wobei die wellenförmigen Elemente mindestens einen Abschnitt aufweisen, der in Richtung der Mittellängsachse des Übergangs abgewinkelt ist, wobei die wellenförmigen Elemente mindestens einen mit einem Elastomer beschichteten Festigkeitsträger aufweisen. Gegenstand der Erfindung ist auch ein Verfahren zur Herstellung eines wellenförmigen Elements zur Herstellung einer Balgschürze.

Zwischen zwei gelenkig miteinander verbundenen Fahrzeugen, seien es straßengebundene Fahrzeuge oder Schienenfahrzeuge, befindet sich ein sogenannter Übergang. Der Übergang setzt sich zusammen aus einem Balg und einer Übergangseinrichtung, wobei durch die Übergangseinrichtung das Hinüberwechseln von Personen zwischen den beiden Fahrzeugteilen ermöglicht wird. Der Balg umgibt zum Schutz vor Witterungseinflüssen die Übergangseinrichtung tunnelartig.

Die Übergangeinrichtung kann in den unterschiedlichsten Ausführungsformen ausgebildet sein. Bekannt sind in diesem Zusammenhang insbesondere Gliederbrücken, wie sie z. B. bei schienengebundenen Fahrzeugen eingesetzt werden, oder aber auch Plattformen mit kreisrunden Drehtellern, die jeweils endseitig an den Boden des jeweiligen Fahrzeuges anschließen. Bei einer Übergangseinrichtung in Form einer Gliederbrücke besteht ein Abstand zwischen dem äußeren Rand der Gliederbrücke und dem die Gliederbrücke tunnelartig umgebenden Balg. Dieser Abstand wird abgedeckt durch die Balgschürze, die insofern ein Stück weit über die Gliederbrücke seitlich übersteht. Bei einer Plattform ist ein Drehteller vorgesehen, wobei der Drehteller in den Bodenabschnitten der beiden einander gegenüberliegenden Fahrzeuge gelagert ist. Auch hierbei gibt es einen seitlichen Abstand zwischen der Seitenwandung des Balges und der Plattform mit dem Drehteller. Auch hier ist insofern eine Balgschürze vorgesehen, die diesen Abstand oder Spalt abdeckt.

Gegenstand der vorliegenden Erfindung ist nun die Ausgestaltung der Balgschürze. Bei der Anordnung einer Balgschürze an der Seitenwand des Balges des Überganges bestehen grundsätzlich zwei Möglichkeiten; zum einen kann bei einer wellenförmig ausgebildeten Balgschürze die Welle nach außen gerichtet sein, das heißt, dass die Wellen sich in Richtung der Mittellängsachse des Übergangs auswölben. Man spricht hierbei von einer sogenannten "negativen Welle". Eine positive Welle würde zum anderen dann vorliegen, wenn der Scheitelpunkt der Wellen in Richtung auf die Balgseitenwand zugerichtet ist. Eine gattungsgemäße Balgschürze ist in der EP 2 322 363 A1 offenbart.

Es wurde bereits darauf hingewiesen, dass die Balgschürze einen unteren Abschnitt aufweist, der dem Übergangsinneren zugerichtet ist. Die Balgschürze steht hierbei seitlich über die Übergangseinrichtung über. Insbesondere bei einer negativen Ausbildung der Balgschürze, das heißt bei einer Ausbildung, bei der die einzelnen wellenförmigen Elemente mit dem Scheitelpunkt der Welle auf die Mittellängsachse des Übergangs zugerichtet sind, unterliegt die Balgschürze im unteren Bereich einem erheblichen Verschleiß. Die rührt zum einen daher, dass z. B. Koffer an der Balgschürze entlang schaben, oder aber auch mit den Schuhen gegen die Balgschürze gestoßen wird. Im Laufe der Zeit zeigen die Balgschürzen insofern Verschleißerscheinungen. Der Verschleiß macht sich in verschiedenen Stufen bemerkbar; in der ersten Stufe wird die Elastomerschicht auf dem Festigkeitsträger nach und nach abgetragen. Liegt der Festigkeitsträger beispielsweise ein Gewebe erst einmal frei, dann dauert es nicht lange, bis auch der Festigkeitsträger ausfranst. Die Balgschürze verliert hierbei in diesem Bereich des Verschleißes an Stabilität, sodass die Gefahr besteht, dass bei einer verschlissenen Balgschürze bei Aufbau entsprechender Kraft Personen in den Spalt zwischen Seitenwand und Übergangseinrichtung gelangen können.

Die der Erfindung zugrunde liegende Aufgabe besteht demzufolge darin, über die Lebensdauer des Balges für eine voll funktionsfähige Balgschürze zu sorgen.

Zur Lösung der Aufgabe wird erfindungsgemäß vorgeschlagen, dass der in Richtung der Mittellängsachse des Übergangs abgewinkelte Abschnitt des wellenförmingen Elements der Balgschürze eine Verschleißschicht aufweist. Die Verschleißschicht befindet sich auf der Sichtseite, also auf der der Mitte des Übergangs zugerichteten Seite des wellenförmigen Elements. Die Verschleißschicht sorgt dafür, dass die Balgschürze nicht unmittelbar beschädigt wird, sondern zunächst nur die Verschleißschicht. Das heißt, bei Beschädigung der Verschleißschicht hat dies keine Auswirkungen auf die Steifigkeit der Schürze als solche. Das heißt, es besteht auch keinerlei Gefahr, dass Personen in den Spalt zwischen Balg einerseits und Übergangseinrichtung andererseits gelangen können. Die Verschleißschicht kann hierbei bereits bei der Herstellung der Balgschürze aufgebracht werden, oder auch dann, wenn die Balgschürze Verschleißerscheinungen zeigt. Beides ist durch die Erfindung umfasst.

Vorteilhafte Ausgestaltungen zu der Erfindung sind den Unteransprüchen zu entnehmen.

Vorteilhaft weist die in Richtung der Mittellängsachse des Übergangs abgewinkelte Abschnitt als zweiter Abschnitt einen ersten Abschnitt aufweist, der parallel zu der die Balgschürze aufnehmenden Seitenwand des Balges verläuft. Mithilfe dieses ersten Abschnittes können die wellenförmigen Elemente an der Seitenwand angeklebt, angenietet oder angenäht werden. Allerdings kann das wellenförmige Element auch ohne den ersten Abschnitt an der Seitenwand befestigt werden und zwar dadurch, dass das wellenförmige Element seitlich im Bereich der Schenkel an den Wellen der Seitenwand angenäht und/oder angeklebt wird.

Da die Balgschürze im Wesentlichen im unteren Bereich, also an dem dem Boden zugewandten Bereich verschleißt, ist nach einem weiteren Merkmal der Erfindung die Verschleißschicht nur im unteren Bereich des zweiten Abschnitts angeordnet.

Des Weiteren ist insbesondere vorgesehen, dass die Verschleißschicht im Wesentlichen vollflächig mit dem mit einem Elastomer beschichteten Festigkeitsträger des wellenförmigen Elements der Balgschürze verbunden ist; mehrere nebeneinander angeordnete und miteinander in Verbindung stehende wellenförmigen Elemente bilden hierbei eine Balgschürze. Durch eine im Wesentlichen vollflächige Verbindung wird die Gefahr vermindert, dass sich die Verschleißschicht unbeabsichtigt von dem wellenförmigen Element löst. Eine solche Verschleißschicht, die vorzugsweise aus einem mit einem Elastomer beschichteten Festigkeitsträger ausgebildet ist, ist einem jeden wellenförmigen Element zugeordnet.

Nach einem vorteilhaften Merkmal der Erfindung ist die Verschleißschicht lösbar mit dem wellenförmigen Element verbunden, was bedeutet, dass dann, wenn die Verschleißschicht abgenutzt ist, diese ausgetauscht werden kann. In diesem Zusammenhang hat es sich insbesondere als vorteilhaft herausgestellt, wenn die Verschleißschicht im Wege der Vulkanisation mit dem wellenförmigen Element verbindbar ist, und zwar derart, dass das wellenförmige Element als Halbzeug vorvulkanisiert ist, wobei die Verschleißschicht vor- oder ausvulkanisiert ist, und dann das Element mit der darauf aufliegenden Verschleißschicht in einer Wellenform ausvulkanisiert wird. Oder anders ausgedrückt bedeutet dies, das Element, das schlussendlich das wellenförmige Element bilden soll, liegt als Halbzeug vorvulkanisiert, z. B. als Platte, vor. Diese Platte oder dieses Element wird dann in die Vulkanisierform zum Ausvulkanisieren zusammen mit der vor- oder ausvulkanisierten Verschleißschicht gelegt. Grundsätzlich besteht auch die Möglichkeit der Verklebung der Verschleißschicht mit der Balgschürze; der Kleber kann hierbei ein solcher sein, der lediglich eine Haftung der Verschleißschicht auf dem wellenförmigen Element der Balgschürze bewirkt.

Es hat sich herausgestellt, dass die Verschleißschicht dann zwar nicht mit unerheblicher Kraft aber dennoch von dem wellenförmigen Element abziehbar ist, und zwar ganz gleich ob die Verschleißschicht mittels Vulkanisation oder Haftkleber mit dem wellenförmigen Element der Balgschürze verbunden ist. Es besteht nach Abziehen der Verschleißschicht die Möglichkeit, eine neue Verschleißschicht aufzubringen, und zwar mittels einer Klebung. Grundsätzlich geht man von einer Lebensdauer eines Balges zwischen 10 und 15 Jahren aus. Es hat sich in Versuchen gezeigt, dass die Verschleißschicht, die grundsätzlich auch die Steifigkeit der wellenförmigen Elemente der Balgschürze erhöht, eine Lebensdauer zwischen acht und zehn Jahren aufweist. Das heißt, wenn nach acht bis zehn Jahren die Verschleißschicht ersetzt wird, und zwar dadurch, dass die Verschleißschicht auf die Schürze aufgeklebt wird, dass das Ende der Lebensdauer der Verschleißschicht mit dem Lebensdauerende des Balges in etwa übereinstimmt. Das heißt, es muss im Wesentlichen nur einmal sichergestellt sein, dass die Verschleißschicht von der Schürze gelöst werden kann.

Zur Verminderung des Verschleißes der Verschleißschicht ist eine besonders glatte Oberfläche auf der Verschleißschicht vorgesehen, um einen geringen Widerstand gegen Abrieb zu bieten.

Nach einem weiteren Merkmal der Erfindung ist die Verschleißschicht elastischer ausgebildet, als das Material für den zweiten Abschnitt des wellenförmigen Elementes der Balgschürze. Die geringere Steifigkeit, das heißt die höhere Elastizität der Verschleißschicht gegenüber dem Material des wellenförmigen Elements hat den Vorteil, dass die Verschleißschicht wesentlich leichter in der Lage ist, den Bewegungen der Balgschürze zu folgen, ohne dass die Gefahr besteht, dass sich die Verbindung löst, wie dies der Fall wäre, wenn die Verschleißschicht steifer oder zumindest genauso steif wäre wie das Material für die Balgschürze.

Anhand der Zeichnungen wird die Erfindung nachstehend beispielhaft näher erläutert.
- Fig. 1: zeigt schematisch eine Übergangshälfte mit Gelenk im Querschnitt;
- Fig. 2: zeigt eine perspektivische Ansicht schräg von unten auf die Balgschürze, wobei die Balgschürze an der Seitenwand des Balges angeordnet ist;
- Fig. 3: zeigt schematisch einen Schnitt durch ein wellenförmiges Element der Balgschürze einschließlich der Verschleißschicht.

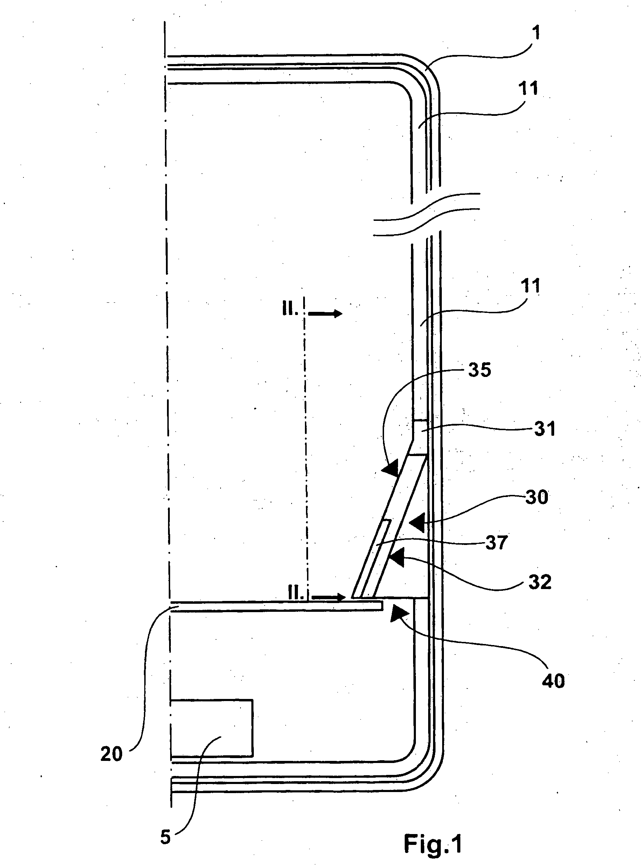

Aus Fig. 1 ist zunächst die Kontur des Wagenkastens erkennbar, wobei der Wagenkasten mit 1 bezeichnet ist. Der am Wagenkasten angeordnete Balg, ein Wellenbalg, weist das Bezugszeichen 10 auf. Der Balg 10 ist im Querschnitt tunnelartig ausgebildet, und umgibt die insgesamt mit 20 bezeichnete Übergangseinrichtung. Die Übergangseinrichtung, beispielsweise eine Brücke, stützt sich auf dem schematisch mit 5 bezeichneten Gelenk ab (nicht dargestellt), durch das die beiden Fahrzeuge miteinander verbunden sind. Am Balg 10 befindet sich an der Seitenwand unten die Balgschürze 30, wobei die Balgschürze 30 eine Reihe von nebeneinander angeordneten wellenförmigen Elementen 35 aufweist, die miteinander in Verbindung stehen. Ein jedes wellenförmiges Element 35 zeigt zwei Abschnitte 31 und 32. Der eine erste Abschnitt 31 eines wellenförmigen Elements dient der Befestigung an der Seitenwand 11 des Balges. Der zweite Abschnitt 32 verläuft winklig vom Balg 10 in Richtung auf die Mittellängsachse des Übergangs zu. Durch die Balgschürze 30 wird der mit 40 bezeichnete Spalt zwischen der Seitenwand 11 des Balges 10 und dem Rand der Übergangseinrichtung 20 abgedeckt.

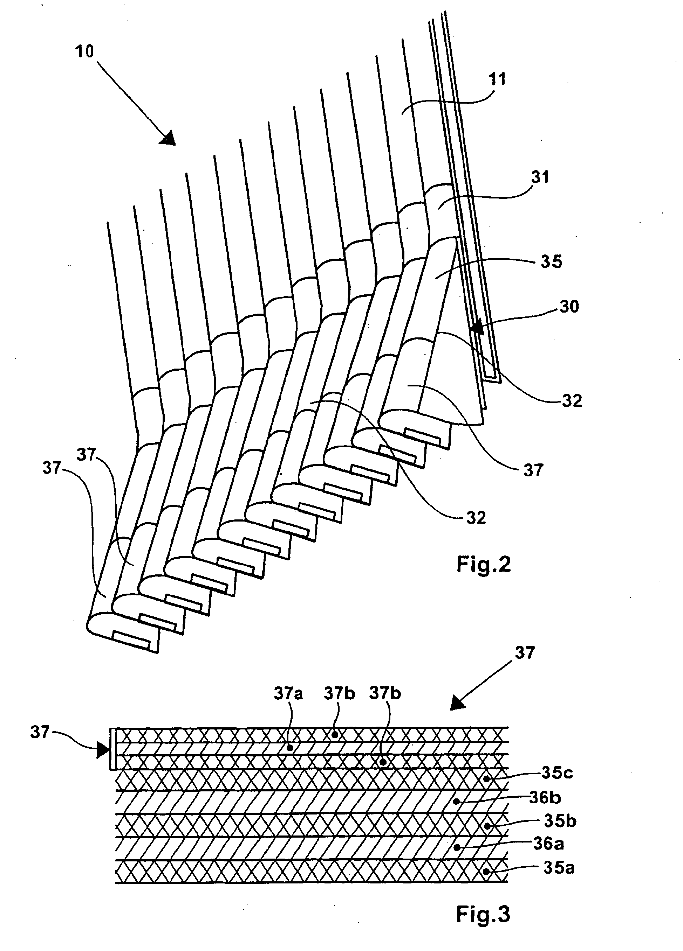

Aus Fig. 2 ist die Ausbildung der Balgschürze mit den wellenförmigen Elementen 35 erkennbar. Im Bereich des Durchgangs auf der Übergangseinrichtung 20 weist ein jedes wellenförmige Element 35 einen Streifen 37 auf, der horizontal verlaufend die Verschleißschicht bildet. Der Streifen, der die Verschleißschicht bildet, weist eine Höhe auf, die in etwa der Hälfte der Höhe des zweiten Abschnitts entspricht. Der Aufbau des wellenförmigen Elementes der Balgschürze ergibt sich in Anschauung von Fig. 3. So ist eine erste Elastomerschicht 35a vorgesehen sowie eine zweite Elastomerschicht 35b, zwischen denen ein Festigkeitsträger 36a, z. B. ein Gewebe, angeordnet ist. Oberhalb der Elastomerschicht 35b befindet sich ein weiterer Festigkeitsträger 36b, der wiederum eine Schicht eines Elastomers z. B. ein CSM, EPDM oder TPU aufweist. Diese oberste Elastomerschicht ist mit 35c bezeichnet. Auf dieser Elastomerschicht lagert die Verschleißschicht 37. Die Verschleißschicht umfasst mindestens einen Festigkeitsträger 37a, z. B. ein Gewebe mit einer Elastomerschicht 37b zu beiden Seiten des Festigkeitsträgers. Das heißt, die Verschleißschicht liegt mit ihrer Elastomerschicht auf dem wellenförmigen Element auf.

Die Herstellung der wellenförmigen Elemente zur Bildung einer Balgschürze stellt sich wie folgt dar: das Grundmaterial für die Bildung der wellenförmigen Elemente umfasst die beiden Festigkeitsträger 36a und 36b, die zu allen Seiten mit einer Elastomerschicht 35a, 35b, 35c umgeben sind. Dieses Material wird zunächst vorvulkanisiert. Nach der Vorvulkanisation wird auf den Bereich, wie er aus Fig. 2 erkennbar ist, die Verschleißschicht 37 aufgelegt, und das vorvulkanisierte Element einschließlich der Verschleißschicht 37 in einer Form ausvulkanisiert. Hierbei verbindet sich die Verschleißschicht 37 mit dem Elastomermaterial 35c auf dem Festigkeitsträger 36b. Die Verschleißschicht besteht hierbei, wie ausgeführt, aus einem Festigkeitsträger also beispielsweise einem Gewebe, wobei die Verschleißschicht beidseitig des Gewebes ebenfalls ein Elastomer z. B. ein EPDM, CSM oder TPU aufweist. Das Elastomermaterial der Verschleißschicht kann identisch mit dem des wellenförmigen Elements sein, oder unterschiedlich. Die Verschleißschicht kann hierbei vorvulkanisiert oder ausvulkanisiert sein, wenn sie auf das Element zur Vulkanisation der Welle aufgelegt wird. Insbesondere bei unterschiedlichen Materialien eröffnen sich Möglichkeiten, um die Haftkraft zwischen Verschleißschicht und wellenförmigen Element zu variieren.

Es wurde bereits darauf hingewiesen, dass die Verschleißschicht im vor- oder ausvulkanisierten Zustand auf das vorvulkanisierte Element aufgelegt wird, wobei dann das Element zu dem wellenförmigen Element in einer entsprechenden Form ausvulkanisiert wird. Es hat sich gezeigt, dass auf diese Weise eine dauerhafte Haftverbindung zwischen dem wellenförmigen Element einerseits und der Verschleißschicht andererseits erzielt wird, wobei allerdings bei entsprechendem Kraftaufwand die Verschleißschicht von dem wellenförmigen Element der Balgschürze abgezogen werden kann. Nach dem Abziehen der verschlissenen Verschleißschicht wird eine neue Verschleißschicht auf diesen Bereich aufgebracht, beispielsweise indem die neue Verschleißschicht mit dem wellenförmigen Element verklebt wird. Es wurde bereits darauf hingewiesen, dass unter normalen Umständen die Verschleißschicht nach etwa acht bis zehn Jahren verschlissen ist, also ausgetauscht werden muss. Nach Abziehen der auf das wellenförmige Element aufgebrachten Verschleißschicht, wird die nächste Verschleißschicht aufgeklebt. Die Klebeverbindung ist nicht lösbar, was an sich unproblematisch ist, da nach Verschleiß der zweiten Verschleißschicht auch der Balg üblicherweise verschlissen ist.

### Bezugszeichenliste:

- 1: Wagenkasten
- 5: Gelenk
- 10: Wellenbalg
- 20: Übergangseinrichtung
- 30: Balgschürze
- 31: erster Abschnitt des wellenförmigen Elements
- 32: zweiter Abschnitt des wellenförmigen Elements
- 35: wellenförmiges Element
- 35a: erste Elastomerschicht
- 35b: zweite Elastomerschicht
- 35c: oberste Elastomerschicht
- 36a: Festigkeitsträger
- 36b: Festigkeitsträger
- 37: Verschleißschicht
- 37a: Festigkeitsträger
- 37b: Elastomerschicht
- 40: Spalt

## Patentansprüche

1. Wellenbalgartige Balgschürze (30) eines Balges (10) eines Übergangs zwischen zwei gelenkig miteinander verbundenen Fahrzeugen, wobei die Balgschürze (30) mehrere nebeneinander angeordnete wellenförmige Elemente (35) aufweist, die im Bereich der Schenkel der einzelnen wellenförmigen Elemente (35) miteinander verbunden sind, wobei die wellenförmigen Elemente (35) mindestens einen Abschnitt aufweisen, der in Richtung der Mittellängsachse des Übergangs abgewinkelt ist, wobei die wellenförmigen Elemente (35) mindestens einen mit einem Elastomer beschichteten Festigkeitsträger (36a, 36b) aufweisen,
**dadurch gekennzeichnet,**
**dass** der in Richtung der Mittellängsachse des Übergangs abgewinkelte Abschnitt des wellenförmigen Elements (35) der Balgschürze (30) eine Verschleißschicht (37) aufweist.

2. Wellenbalgartige Balgschürze (30) eines Balges (10) eines Übergangs zwischen zwei gelenkig miteinander verbundenen Fahrzeugen nach Anspruch 1,
**dadurch gekennzeichnet,**
**dass** der in Richtung der Mittellängsachse des Übergangs abgewinkelte Abschnitt als zweiter Abschnitt (32) einen ersten Abschnitt (31) aufweist, der parallel zu der die Balgschürze (30) aufnehmenden Seitenwand des Balges (10) verläuft.

3. Wellenbalgartige Balgschürze (30) eines Balges (10) eines Übergangs zwischen zwei gelenkig miteinander verbundenen Fahrzeugen nach Anspruch 1 oder 2,
**dadurch gekennzeichnet,**
**dass** der zweite Abschnitt des wellenförmigen Elements (35) der Balgschürze (30) im Bereich des dem Boden des Übergangs zugewandten Endes die Verschleißschicht (37) aufweist.

4. Wellenbalgartige Balgschürze (30) eines Balges (10) eines Übergangs zwischen zwei gelenkig miteinander verbundenen Fahrzeugen nach einem der voranstehenden Ansprüche,
**dadurch gekennzeichnet,**
**dass** die Verschleißschicht (37) im Wesentlichen vollflächig mit dem mit einem Elastomer beschichteten Festigkeitsträger (36a, 36b) des wellenförmigen Elements (35) auf der der Mitte des Übergangs zugewandten Seite verbunden ist.

5. Wellenbalgartige Balgschürze (30) eines Balges (10) eines Übergangs zwischen zwei gelenkig miteinander verbundenen Fahrzeugen nach einem der voranstehenden Ansprüche,
**dadurch gekennzeichnet,**
**dass** die Verschleißschicht (37) aus einem mit einer Elastomerschicht (37b) beschichteten Festigkeitsträger (37a) ausgebildet ist.

6. Wellenbalgartige Balgschürze (30) eines Balges (10) eines Übergangs zwischen zwei gelenkig miteinander verbundenen Fahrzeugen nach einem der voranstehenden Ansprüche,
**dadurch gekennzeichnet,**
**dass** die Verschleißschicht (37) lösbar mit dem wellenförmigen Element (35) verbunden ist.

7. Wellenbalgartige Balgschürze (30) eines Balges (10) eines Übergangs zwischen zwei gelenkig miteinander verbundenen Fahrzeugen nach einem der voranstehenden Ansprüche,
**dadurch gekennzeichnet,**
**dass** die Verschleißschicht (37) im Wege der Vulkanisation mit dem wellenförmigen Element (35) verbindbar ist.

8. Wellenbalgartige Balgschürze (30) eines Balges (10) eines Übergangs zwischen zwei gelenkig miteinander verbundenen Fahrzeugen nach einem der voranstehenden Ansprüche,
**dadurch gekennzeichnet,**
**dass** die Verschleißschicht (37) eine glatte Oberfläche aufweist.

9. Wellenbalgartige Balgschürze (30) eines Balges (10) eines Übergangs zwischen zwei gelenkig miteinander verbundenen Fahrzeugen nach einem der voranstehenden Ansprüche,
**dadurch gekennzeichnet,**
**dass** das Material für die Verschleißschicht (37) elastischer ausgebildet ist, als das Material für den zweiten Abschnitt (32) des wellenförmigen Elements (35).

10. Verfahren zur Herstellung eines wellenförmigen Elementes (35) zur Herstellung einer wellenbalgförmigen Balgschürze (30) gemäß einem oder mehrerer der voranstehenden Ansprüche,
**dadurch gekennzeichnet,**
**dass** das Element (35) vorvulkanisiert wird, wobei im Anschluss daran auf das vorvulkanisierte Element eine Verschleißschicht (37) mit einem Festigkeitsträger (37a) und einer vor- oder ausvulkanisierten Elastomerschicht aufgelegt wird, wobei das Element (35) einschließlich der vor- oder ausvulkanisierten Verschleißschicht (37) in einer Wellenform ausvulkanisiert wird.

## Claims

1. A corrugated bellows-type bellows apron (30) of a bellows (10) of a gangway between two vehicles articulately connected to each other, the bellows apron (30) having several corrugated elements (35) disposed next to each other, which are connected to each other in the area of the leg of the individual corrugated elements (35), the corrugated elements (35) having at least one section that is bent in the direction of the center longitudinal axis of the gangway, the corrugated elements (35) having at least one reinforcement (36a, 36b) coated with an elastomer,
**characterized in that**
the section of the corrugated element (35) of the bellows apron (30) that is bent in the direction of the centre longitudinal axis of the gangway has a wear layer (37).

2. The corrugated bellows-type bellows apron (30) of a bellows (10) of a gangway between two vehicles articulately connected to each other according to claim 1,
**characterized in that**
as a second section (32), the section bent in the direction of the centre longitudinal axis of the gangway has a first section (31) that runs parallel to the lateral wall of the bellows (10) receiving the bellows apron (30).

3. The corrugated bellows-type bellows apron (30) of a bellows (10) of a gangway between two vehicles articulately connected to each other according to claim 1 or 2,
**characterized in that**
the second section of the corrugated element (35) of the bellows apron (30) features the wear layer (37) in the area of the end oriented toward the floor of the gangway.

4. The corrugated bellows-type bellows apron (30) of a bellows (10) of a gangway between two vehicles articulately connected to each other according to one of the afore-mentioned claims,
**characterized in that**
the wear layer (37) is joined, substantially across its entire surface, with the reinforcement (36a, 36b), coated with an elastomer, of the corrugated element (35) on the side facing the middle of the gangway.

5. The corrugated bellows-type bellows apron (30) of a bellows (10) of a gangway between two vehicles articulately connected to each other according to one of the afore-mentioned claims,
**characterized in that**
the wear layer (37) is formed by a reinforcement (37a) coated with an elastomer layer (37b).

6. The corrugated bellows-type bellows apron (30) of a bellows (10) of a gangway between two vehicles articulately connected to each other according to one of the afore-mentioned claims,
**characterized in that**
the wear layer (37) is detachably connected with the corrugated element (35).

7. The corrugated bellows-type bellows apron (30) of a bellows (10) of a gangway between two vehicles articulately connected to each other according to one of the afore-mentioned claims,
**characterized in that**
the wear layer (37) is connectable to the corrugated element (35) during vulcanization.

8. The corrugated bellows-type bellows apron (30) of a bellows (10) of a gangway between two vehicles articulately connected to each other according to one of the afore-mentioned claims,
**characterized in that**
the wear protection layer (37) has a smooth surface.

9. The corrugated bellows-type bellow apron (30) of a bellows (10) of a gangway between two vehicles articulately connected to each other according to one of the afore-mentioned claims,
**characterized in that**
the material for the wear protection layer (37) is configured more elastically than the material for the second section (32) of the corrugated element (35).

10. A method for producing a corrugated element (35) for producing a corrugated bellows-type bellow apron (30) according to one or several of the afore-mentioned claims,
**characterized in that**
the element (35) is pre-vulcanized, whereupon a wear protection layer (37) with a reinforcement (37a) and a pre-vulcanized or completely vulcanized elastomer layer is applied onto the pre-vulcanized element, the element (35) including the pre-vulcanized or completely vulcanized wear protection layer (37) being completely vulcanized in a waveform.

## Revendications

1. Jupe de soufflet ondulée (30) d'un soufflet (10) d'un passage d'intercommunication entre deux véhicules reliés de manière articulée, la jupe de soufflet (30) comportant plusieurs éléments ondulés (35) juxtaposés et reliés au niveau des branches des divers éléments ondulés (35), les éléments ondulés (35) comportant au moins une section coudée vers l'axe médian longitudinal du passage, les éléments ondulés (35) comportant au moins un renfort (36a, 36b) enduit avec un élastomère,
**caractérisé en ce que**
la section de l'élément ondulé (35) de la jupe de soufflet (30) coudée vers l'axe médian longitudinal du passage comporte une couche d'usure (37).

2. Jupe de soufflet ondulée (30) d'un soufflet (10) d'un passage d'intercommunication entre deux véhicules reliés de manière articulée selon la revendication 1,
**caractérisée en ce qu'**
en tant que deuxième section (32), la section coudée vers l'axe médian longitudinal du passage comporte une première section (31) s'étendant parallèlement à la paroi latérale du soufflet (10) recevant la jupe de soufflet (30).

3. Jupe de soufflet ondulée (30) d'un soufflet (10) d'un passage d'intercommunication entre deux véhicules reliés de manière articulée selon la revendication 1 ou 2,
**caractérisée en ce que**
la deuxième section de l'élément ondulé (35) de la jupe de soufflet (30) présente la couche d'usure (37) dans la région de son extrémité orientée vers le sol du passage.

4. Jupe de soufflet ondulée (30) d'un soufflet (10) d'un passage d'intercommunication entre deux véhicules reliés de manière articulée selon l'une quelconque des revendications précédentes,
**caractérisée en ce que**
la couche d'usure (37) est reliée, substantiellement sur toute sa surface, avec le renfort (36a, 36b), enduit d'un élastomère, de l'élément ondulé (35), sur son côté orienté vers le milieu du passage.

5. Jupe de soufflet ondulée (30) d'un soufflet (10) d'un passage d'intercommunication entre deux véhicules reliés de manière articulée selon l'une quelconque des revendications précédentes,
**caractérisée en ce que**
la couche d'usure (37) est formée par un renfort (37a) enduit d'une couche élastomère (37b).

6. Jupe de soufflet ondulée (30) d'un soufflet (10) d'un passage d'intercommunication entre deux véhicules reliés de manière articulée selon l'une quelconque des revendications précédentes,
**caractérisée en ce que**
la couche d'usure (37) est reliée de manière détachable avec l'élément ondulé (35).

7. Jupe de soufflet ondulée (30) d'un soufflet (10) d'un passage d'intercommunication entre deux véhicules reliés de manière articulée selon l'une quelconque des revendications précédentes,
**caractérisée en ce que**
la couche d'usure (37) est apte à être reliée avec l'élément ondulé (35) lors de la vulcanisation.

8. Jupe de soufflet ondulée (30) d'un soufflet (10) d'un passage d'intercommunication entre deux véhicules reliés de manière articulée selon l'une quelconque des revendications précédentes,
**caractérisée en ce que**
la couche d'usure (37) comporte une surface lisse.

9. Jupe de soufflet ondulée (30) d'un soufflet (10) d'un passage d'intercommunication entre deux véhicules reliés de manière articulée selon l'une quelconque des revendications précédentes,
**caractérisée en ce que**
le matériau de la couche d'usure (37) est plus élastique que le matériau de la deuxième section (32) de l'élément ondulé (35).

10. Procédé de fabrication d'un élément ondulé (35) pour la fabrication d'une jupe de soufflet ondulée (30) selon l'une ou plusieurs des revendications précédentes,
**caractérisé en ce que**
l'élément (35) est pré-vulcanisé, après quoi une couche d'usure (37) avec un renfort (37a) et une couche élastomère pré-vulcanisée ou complètement vulcanisée est appliquée sur l'élément pré-vulcanisé, l'élément (35) étant complètement vulcanisé dans un moule ondulé avec la couche d'usure (37) pré-vulcanisée ou complètement vulcanisée.
